# EUROPEAN PATENT APPLICATION

(11) **EP 2 902 426 A1**
(43) Date of publication of application: **05.08.2015**
(21) Application number: 15159560.0
(22) Date of filing: 27.01.2012
(51) Int. Cl.: C08G 18/28, C08L 75/04, C08J 9/00, C08G 101/00, C08G 18/48, C08G 18/76, C08G 18/40

(54) **Low-density foam and foam-based objects**

(62) Divisional of application: 12866737.5
(71) Applicant: Tempur-Pedic Management, LLC, Lexington, KY 40511 (US)
(72) Inventor: Simonsen, Ivan Simon, 5560 Aarup (DK)
(74) Representative: Hoefer & Partner Patentanwälte mbB

(57) **Abstract**

According to one embodiment, the disclosure provides a foam-based object containing a foam having a density of 30 kg/m³ or less. The foam contains a base polyol, a filled polyol, and an additive polyol. The foam lacks a chain extender or crosslinker. In another embodiment, the foam has a hardness loss of less than 15% in a hardness loss test. According to another embodiment, the disclosure provides an initial formulation containing a base polyol, a filled polyol, an additive polyol, and a catalyst, but lacking a chain extender or crosslinker. The initial formulation is operable to form a foam having a density of 30 kg/m³ or less upon reaction with an isocyanate. A fourth embodiment provides a method of forming a foam by combining an isocyanate with such an initial formulation to produce a foam having a density of 30 kg/m³ or less and lacking a chain extender or crosslinker.

## Description

### TECHNICAL FIELD

The present invention relates to a low-density foam, an initial formulation for making such a foam, and objects containing such a foam. In certain embodiments, the low-density foam may meet selected criteria for other properties, such as hardness loss or compression properties. In certain embodiments, the foam may be contained in a foam-based object, such as a pillow, mattress, or other bedding or support devices. The present invention also relates to methods of making low-density foam.

### BACKGROUND

Foam is generally made up of a structural material containing voids or cavities that are filled with air or another gas or a liquid. This overall structure imparts a number of useful properties on the foam. For instance, foams containing a sufficiently rigid and durable structural material may be formed into objects having a durable shape. These objects may be lighter in weight, more compressible, and otherwise different in advantageous ways than similarly-shaped objects formed from other materials. Objects made from foam may be able to deform and later return to their original shape, or a shape very similar to their original shape, or they may adopt a new shape in response to use.

As a result of the above properties, one excellent use for foam is in objects designed to comfortably support the human body, such as mattresses and pillows. Although a variety of foams are available, the desired properties of a foam may vary depending on its intended use and improved or alternative foams remain desirable.

### SUMMARY

According to one embodiment, the invention provides a foam-based object containing a foam having a density of 30 kg/m³ or less. The foam contains a base polyol, wherein the base polyol, prior to foam formation, has a functionality of between 2 and 3, contains at least 70% secondary hydroxyl (OH) groups, and has a hydroxyl (OH) number of between 20 and 240. The foam also contains a filled polyol, wherein the filled polyol, prior to foam formation, contains at least 70% secondary material. The foam additionally contains an additive polyol, wherein the additive polyol, prior to foam formation, has a functionality greater than two and contains greater than 50% ethylene oxide (EO). The foam lacks a chain extender or crosslinker.

According to another embodiment, the invention provides a foam-based object containing a foam having a density of 30 kg/m³ or less and a hardness loss of less than 15% in a hardness loss test specified in American Society for Testing and Materials (ASTM) standard D3574-95.

According to another embodiment, the invention provides a foam-based object containing a foam having a density of 30 kg/m³ or less and a loss in height for dry and wet set compression of less than 15% in compression test specified in International Organization for Standardization (ISO) standard 1856:2000.

According to another embodiment, the invention provides an initial formulation containing a base polyol, wherein the base polyol, prior to foam formation, has a functionality of between 2 and 3, comprises at least 70% secondary hydroxyl (OH) groups, and has a hydroxyl (OH) number of between 20 and 240. The initial formulation also contains a filled polyol, wherein the filled polyol, prior to foam formation, contains at least 70% secondary material. The initial formulation also contains an additive polyol, wherein the additive polyol, prior to foam formation, has a functionality greater than two and contains greater than 50% ethylene oxide (EO). The initial formulation further contains a catalyst, but lacks a chain extender or crosslinker. The initial formulation is operable to form a foam having a density of 30 kg/m³ or less upon reaction with an isocyanate.

According to a fourth embodiment, the invention provides a method of forming a foam by combining an isocyanate with an initial formulation to produce a foam having a density of 30 kg/m³ or less and lacking a chain extender or crosslinker. The initial formulation contains a base polyol, wherein the base polyol, prior to foam formation, has a functionality of between 2 and 3, comprises at least 70% secondary hydroxyl (OH) groups, and has a hydroxyl (OH) number of between 20 and 240. The initial formulation also contains a filled polyol, wherein the filled polyol, prior to foam formation, contains at least 70% secondary material. The initial formulation also contains an additive polyol, wherein the additive polyol, prior to foam formation, has a functionality greater than two and contains greater than 50% ethylene oxide (EO). The initial formulation further contains a catalyst, but lacks a chain extender or crosslinker. The initial formulation is operable to form a foam having a density of 30 kg/m³ or less upon reaction with an isocyanate.

### DETAILED DESCRIPTION

The present invention relates to a low-density foam, objects, such as pillows and mattresses containing such foam, an initial formulation for making such a foam and methods of making a low-density foam. According to one embodiment, the invention relates to a low-density foam having a density of 30 kg/m³ or less, more particularly to a foam having a density of 25 kg/m³ or less.

The low-density foam may be formed from an initial formulation, which is then foamed using an isocyanate to produce the structural material in a resultant foam. The initial formulation may contain base, filled, and additive polyols and may lack a chain extender or crosslinker. The initial formulation may also contain other materials. An isocyanate may be added to the initial formulation to create a low-density foam. The low-density foam will contain the same materials as are present in the initial formulation in addition to the isocyanate and reaction products. For instance, water and polyols in the initial formulation will react with the isocyanate to form the low-density foam. The final, low-density foam may be a polymeric material which is built up in a network to form cells. All, or substantially all, free OH groups, particularly those found on the polyols in the initial formulation, may have reacted with NCO groups in the polyol to form a urethane bond. The properties of the final, low-density foam may depend on whether the polyols in the initial formulation contain primary or secondary OH groups and the ratio between them as well as on the formation of the network.

In a specific embodiment, the initial formulation may contain a base polyol, which may include propylene oxide (PO), ethylene oxide (EO), combinations of these materials, and, in some embodiments, other materials. In particular, the base polyol may include any polyol with a functionality of between 2 and 3, with at least 70% secondary hydroxyl (OH) groups (*e.g.* 70% of the total number of hydroxyl groups may be a secondary hydroxyl group, such as propylene oxide (PO)), and with a hydroxyl (OH) number of between 20 and 240. In more specific embodiments, the hydroxyl number may be between 38 and 56, more particularly between 46 and 50. In a specific embodiment, the base polyol may be a low volatile organic compounds (VOC) inactive propylene oxide/ethylene oxide polyether triol such as Arcol® Polyol 1108 (Bayer MaterialScience AG, Leverkusen, Germany).

The initial formulation may include between 45 and 95 parts per hundred polyol (pphp) base polyol. pphp reflects the proportion, by weight, as compared to total base and filled polyol

(but not additive polyol). More particularly it may include between 50 and 90 pphp, an even more particularly between 60 and 80 pphp.

The filled polyol in the initial formulation may include a filled polyol containing at least 70% secondary hydroxyl groups, such as propylene oxide (PO). The filled polyol may be any polymer polyol with solid particles. For instance, is may be a polyether polyol containing dispersed particles, such as styrene-acrylo-nitrile (SAN) particles. One such polyol is Voralux™ HL400 (Dow Chemical, Freeport, TX). The amount of solid particles in the filled polyol may range from between 18% and 71 % by weight, more particularly between 38% and 46%, and even more particularly between 40% and 44%.

The initial formulation may include between 10 pphp and 50 pphp filled polyol. More particularly it may include between 15 pphp and 45 pphp, and even more particularly between 20 pphp and 40 pphp.

The additive polyol in the initial formulation may contain at least 70% primary hydroxyl groups, such as ethylene oxide (EO). The additive polyol may be any polyol with a functionality greater than two and with and ethylene oxide (EO) (or other primary hydroxyl group) content greater than 50%. According to a more specific embodiment, the additive polyol may be an ethylene oxide (EO)-rich polyol with a molecular weight of between 4700 (g/mol) and 5400 (g/mol). Particularly it may be a glycerol-started triol polyether polyol, such as Voranol ™ CP 1421 (Dow Chemical.)

The additive polyol may be present in the initial formulation in an amount of between 1 pphp and 30 pphp. More particularly, it may be present in an amount of between 2 pphp and 10 pphp. Even more particularly it may be present in an amount of 5 pphp.

The initial formulation may also include additional materials, such as water, catalysts, surfactants, and anti-microbial agents. Alternatively, these additional materials may be added to the initial formulation and isocyanate when they are mixed to form the low-density foam.

Water may be any type of water without sufficient contaminants to interfere with formation or function of the resulting foam. Water may be present in the initial formulation in an amount between 3.7 pphp and 4.9 pphp. The amount of water in the initial formulation may directly affect the density of the resulting low-density foam.

Catalysts may include one or more types of catalyst, including curing catalysts and blowing catalysts. In some embodiments only one type of catalyst may be used. In other embodiments, only one catalyst of any type may be used.

In general, most catalysts known in the art to be compatible with ethylene oxide (EO) and propylene oxide (PO) polyols may be suitable. Low emission blowing catalysts may be used for environmental and safety reasons. According to a particular embodiment, the catalysts may include a curing catalyst present in an amount between 0.05 pphp and 0.50 pphp. In one example, the curing catalyst may be a stannous octoate material, such as Dabco® T9 (Air Products and Chemicals, Allentown, PA) or a similar stannous compound material. According to another particular embodiment, the catalysts may include a blowing catalyst present in an amount between 0.05 pphp to 1.00 pphp. In one example, the blowing catalyst may be Dabco ® NE 300 (Air Products and Chemicals). In another example, it may be JEFFCAT® ZF10 (Huntsman Chemicals, The Woodlands, TX).

The surfactant may be any silicone surfactant formulated for use in a flexible slabstock foam. According to one embodiment, the surfactant may be Tegostab® B8220 (Evonik Industries, Essen, Germany). Surfactant may be present in an amount ranging from 0.30 pphp to 2.00 pphp.

The anti-microbial agent may be any material able to kill or control the growth of one or more microbes that is not harmful to humans when incorporated in the low-density foam. In one embodiment, it may be any anti-microbial agent certified under the Oeko-Tex® certification mark or any resulting in a product that may be certified under the LGA-Tested® certification mark. Multiple anti-microbial agents may be used to kill or control different microbes or to obtain synergistic effects. The anti-microbial agents may be present in an amount ranging from 0,05 pphp to 1,00 pphp.

The initial formulation may also contain other materials that would be useful in the final low-density foam, such as flame retardants or colorants.

The initial formulation may lack a chain extender or crosslinker, such as DEOA or TEA. The use of filled polyols and additive polyols with the base polyol as described above may allow the formation of a foam without the need for a chain extender or crosslinker.

The low-density foam may be formed by reacting the initial formulation with an isocyanate. Any isocyanate material able to react with one or more polyols to produce a foam may be used. The isocyanate material may also be selected to react with one or more catalysts and one or more additional materials in the initial formulations, such as water. In one embodiment, the isocyanate may be a toluene diisocyanate (TDI), such as T80 isocyanate, which is typically an 80% - 20% mixture of the 2,4 and 2,6 isomers of toluene diisocyanate.

According to one very specific embodiment, a low-density foam may be formed by mixing 52.41 pphp T80 isocyanate with an initial formulation with the components set forth in Table 1.

**Table 1: Example Initial Formulation Components**

| **Material** | pphp |
|---|---|
| Arcol® Polyol 1108 | 70.00 |
| Voralux™ HL400 | 30.00 |
| Voranol ™ CP 1421 | 5.00 |
| Water | 4.30 |
| Tegostab® B8220 | 1.50 |
| Dabco® T9 | 0.24 |
| Dabco® NE300 or JEFFCAT® ZF10 | 0.03 |
| Anti-microbial agent | 0.43 |
| Colorant | 0.10 |

The low-density foam formed using the initial formulation and isocyanate as described above may have a final formulation reflective of the reaction products of the initial formulation and isocyanate.

According to another embodiment, the invention relates to an object containing a low-density foam as described above. In particular, the object may contain the low-density foam in the place of a higher-density foam, such as a foam having a density of 33 kg/m³ or higher. The low-density foam may have a density of 30 kg/m³ or less or even 25 kg/m³ or less, but may exhibit hardness loss or compression properties similar to those of foam with a density of around 33 kg/m³.

Hardness loss may be measured by any suitable test. One suitable test, commonly referred to as a hardness loss test, involves dynamic pounding of the foam with a metal plate for a set time period and measuring hardness before and after to determine the amount of any decrease in hardness as a result. In one embodiment, the low-density foam having a density of 30 kg/m³ or less or even 25 kg/m³ or less may exhibit a hardness loss of less than 15% or even less than 10% as measured using a standard hardness loss test, such as the dynamic fatigue test specified in American Society for Testing and Materials (ASTM) standard D3574-95, incorporated in its entirety by reference herein.

Compression properties may also be measured by any other suitable test. In one suitable test, commonly called a hot (dry) compression test, the foam is placed in an oven and heated to a particular temperature while it is compressed for a certain period of time (for example, 24 hours). The hardness and height of the foam are then measured. In another suitable test, commonly called a wet compression test, the foam is wetted and compressed for a certain period of time (for example, 24 hours) and then the hardness and height of the foam are measured. In one specific embodiment, the compression properties may be measured using the test specified in ISO standard 1856:2000, incorporated in its entirety by reference herein. Loss in height for dry and wet compression set may be less than 10% as measured using International Organization for Standardization (ISO) 1856:2000.

Objects containing a low-density foam may include objects designed to comfortably support the human body. Such objects may include pillows of various types, such a bed pillows, seating, seating pillows, such as furniture pillows, and mattresses. Such objects may also include medical and therapeutic objects, such mobility assistance devices and physical therapy devices. Low-density foam might also find applications in the automotive industry, for instance in automobile seating, or in other transportation industries in airline, train and bus seating.

Although only exemplary embodiments of the disclosure are specifically described above, it will be appreciated that modifications and variations of these examples are possible without departing from the spirit and intended scope of the disclosure. For instance, numeric values expressed herein will be understood to include minor variations and thus embodiments "about" or "approximately" the expressed numeric value unless context, such as reporting as experimental data, makes clear that the number is intended to be a precise amount. Furthermore, slight variations in the mixtures of raw materials or the use of equivalent raw materials (for instance from different manufacturers than those used in the above example embodiments) may be possible.

The invention can also be described by the following clauses:
1. A foam-based object comprising:
   a foam having a density of 30 kg/m³ or less, wherein the foam comprises:
      a base polyol, wherein the base polyol, prior to foam formation, has a functionality of between 2 and 3, comprises at least 70% secondary hydroxyl (OH) groups, and has a hydroxyl (OH) number of between 20 and 240;
      a filled polyol, wherein the filled polyol, prior to foam formation, comprises at least 70% secondary material; and
      an additive polyol, wherein the additive polyol, prior to foam formation, has a functionality greater than two and comprises greater than 50% ethylene oxide (EO),
   wherein the foam lacks a chain extender or crosslinker.
2. The foam-based object according to Claim 1, wherein the base polyol is present in an amount of between 45 and 95 parts per hundred polyol (pphp).
3. The foam-based object according to Claim 1, wherein the base polyol comprises ethylene oxide (EO).
4. The foam-based object according to Claim 1, wherein the base polyol comprises propylene oxide (PO).
5. The foam-based object according to Claim 1, wherein the filled polyol is present in an amount of between 10 and 50 parts per hundred polyol (pphp).
6. The foam-based object according to Claim 1, wherein the filled polyol comprises between 18% and 71% by weight solid particles.
7. The foam-based object according to Claim 1, wherein the additive polyol is present in an amount of between 1 and 30 parts per hundred polyol (pphp).
8. The foam-based object according to Claim 1, wherein the additive polyol has a molecular weight of between 4700 g/mol and 5400 g/mol.
9. The foam-based object according to Claim 1, wherein the foam has a density of 25 kg/m³ or less.
10. The foam-based object according to Claim 1, wherein the foam exhibits a hardness loss of less than 15% in a hardness loss test.
11. The foam-based object according to Claim 1, wherein the object is in the form of a mattress.
12. The foam-based object according to Claim 1, wherein the object is in the form of a pillow.
13. An initial formulation comprising:
   a base polyol, wherein the base polyol, prior to foam formation, has a functionality of between 2 and 3, comprises at least 70% secondary hydroxyl (OH) groups, and has a hydroxyl (OH) number of between 20 and 240;
   a filled polyol, wherein the filled polyol, prior to foam formation, comprises at least 70% secondary material;
   an additive polyol, wherein the additive polyol, prior to foam formation, has a functionality greater than two and comprises greater than 50% ethylene oxide (EO); and
   a catalyst,
   wherein the initial formulation lacks a chain extender or crosslinker, and
   wherein the initial formulation is operable to form a foam having a density of 30 kg/m³ or less upon reaction with an isocyanate.
14. The initial formulation according to Claim 13, wherein the base polyol is present in an amount of between 45 and 95 parts per hundred polyol (pphp).
15. The initial formulation according to Claim 13, wherein the base polyol comprises ethylene oxide (EO).
16. The initial formulation according to Claim 13, wherein the base polyol comprises propylene oxide (PO).
17. The initial formulation according to Claim 13, wherein the filled polyol is present in an amount of between 10 and 50 parts per hundred polyol (pphp).
18. The initial formulation according to Claim 13, wherein the filled polyol comprises between 18% and 71% solid particles.
19. The initial formulation according to Claim 13, wherein the additive polyol is present in an amount of between 1 and 30 parts per hundred polyol (pphp).
20. The initial formulation according to Claim 13, wherein the additive polyol has a molecular weight of between 4700 g/mol and 5400 g/mol.
21. The initial formulation according to Claim 13, wherein the catalyst comprises a curing catalyst.
22. The initial formulation according to Claim 13, wherein the catalyst comprises a blowing catalyst.
23. The initial formulation according to Claim 13, further comprising water.
24. The initial formulation according to Claim 13, further comprising a surfactant.
25. A method of forming a foam comprising:
   combining an isocyanate with an initial formulation to produce a foam having a density of 30 kg/m³ or less and lacking a chain extender or crosslinker, the initial formulation comprising:
      a base polyol, wherein the base polyol, prior to foam formation, has a functionality of between 2 and 3, comprises at least 70% secondary hydroxyl (OH) groups, and has a hydroxyl (OH) number of between 20 and 240;
      a filled polyol, wherein the filled polyol, prior to foam formation, comprises at least 70% secondary material;
      an additive polyol, wherein the additive polyol, prior to foam formation, has a functionality greater than two and comprises greater than 50% ethylene oxide (EO); and
      a catalyst,
   wherein the initial formulation lacks a chain extender or crosslinker.
26. The method according to Claim 25, wherein the isocyanate reacts one or more materials in the initial formulation in the presence of the catalyst to form the foam.
27. A foam-based object comprising:
   a foam having a density of 30 kg/m³ or less; and
   a hardness loss of less than 15% in a hardness loss test specified in American Society for Testing and Materials (ASTM) standard D3574-95.
28. A foam-based object comprising:
   a foam having a density of 30 kg/m³ or less; and
   a loss in height for dry and wet set compression of less than 15% in compression test specified in International Organization for Standardization (ISO) standard 1856:2000.

## Claims

1. An initial formulation comprising:
a base polyol, wherein the base polyol, prior to foam formation, has a functionality of between 2 and 3, comprises at least 70% secondary hydroxyl (OH) groups, and has a hydroxyl (OH) number of between 20 and 240;
a filled polyol, wherein the filled polyol, prior to foam formation, comprises at least 70% secondary material;
an additive polyol, wherein the additive polyol, prior to foam formation, has a functionality greater than two and comprises greater than 50% ethylene oxide (EO); and
a catalyst,
wherein the initial formulation lacks a chain extender or crosslinker, and
wherein the initial formulation is operable to form a foam having a density of 30 kg/m³ or less upon reaction with an isocyanate.

2. The initial formulation according to Claim 1, wherein the base polyol is present in an amount of between 45 and 95 parts per hundred polyol (pphp).

3. The initial formulation according to Claim 1, wherein the base polyol comprises ethylene oxide (EO).

4. The initial formulation according to Claim 1, wherein the base polyol comprises propylene oxide (PO).

5. The initial formulation according to Claim 1, wherein the filled polyol is present in an amount of between 10 and 50 parts per hundred polyol (pphp).

6. The initial formulation according to Claim 1, wherein the filled polyol comprises between 18% and 71% solid particles.

7. The initial formulation according to Claim 1, wherein the additive polyol is present in an amount of between 1 and 30 parts per hundred polyol (pphp).

8. The initial formulation according to Claim 1, wherein the additive polyol has a molecular weight of between 4700 g/mol and 5400 g/mol.

9. The initial formulation according to Claim 1,
- wherein the catalyst comprises a curing catalyst, or
- wherein the catalyst comprises a blowing catalyst.

10. The initial formulation according to Claim 1, further comprising water.

11. The initial formulation according to Claim 11, further comprising a surfactant.

12. A method of forming a foam comprising:
combining an isocyanate with an initial formulation to produce a foam having a density of 30 kg/m³ or less and lacking a chain extender or crosslinker, the initial formulation comprising:
a base polyol, wherein the base polyol, prior to foam formation, has a functionality of between 2 and 3, comprises at least 70% secondary hydroxyl (OH) groups, and has a hydroxyl (OH) number of between 20 and 240;
a filled polyol, wherein the filled polyol, prior to foam formation, comprises at least 70% secondary material;
an additive polyol, wherein the additive polyol, prior to foam formation, has a functionality greater than two and comprises greater than 50% ethylene oxide (EO); and
a catalyst,
wherein the initial formulation lacks a chain extender or crosslinker.

13. The method according to Claim 12, wherein the isocyanate reacts one or more materials in the initial formulation in the presence of the catalyst to form the foam.

14. A foam-based object comprising:
a foam having a density of 30 kg/m³ or less; and
a hardness loss of less than 15% in a hardness loss test specified in American Society for Testing and Materials (ASTM) standard D3574-95.

15. A foam-based object comprising:
a foam having a density of 30 kg/m³ or less; and
a loss in height for dry and wet set compression of less than 15% in compression test specified in International Organization for Standardization (ISO) standard 1856:2000.
